# EUROPÄISCHE PATENTSCHRIFT

(11) **EP 3 384 795 B1**
(45) Veröffentlichungstag und Bekanntmachung des Hinweises auf die Patenterteilung: **10.06.2020**
(21) Anmeldenummer: 18166206.5
(22) Anmeldetag: 06.04.2018
(51) Int. Cl.: A42B 3/18, A42B 1/24

(54) **HALTERUNG FÜR BRILLENGLÄSER UND HELM MIT SOLCH EINER HALTERUNG**
HOLDER FOR SPECTACLE GLASSES AND HELMET WITH ONE SUCH HOLDER
SUPPORT POUR VERRES DE LUNETTES ET CASQUE POURVU D'UN TEL SUPPORT

(30) Priorität: 06.04.2017 AT 502872017
(43) Veröffentlichungstag der Anmeldung: 10.10.2018
(73) Patentinhaber: Lechner, Stefan, 4060 Leonding (AT)
(72) Erfinder: Lechner, Stefan, 4060 Leonding (AT)
(74) Vertreter: Jell, Friedrich

(56) Entgegenhaltungen:
- WO-A2-2008/013373
- DE-U1-202015 007 127
- KR-A- 20120 116 062
- US-A1- 2007 050 888

## Beschreibung

Die Erfindung betrifft eine Halterung für Brillengläser mit einem Befestigungsteil zur Montage an einer Kopfbedeckung, insbesondere einem Helm, mit einem am Befestigungsteil magnetisch, lösbar gehaltenen Halteteil, das einen Nasensteg zur Halterung der Brillengläser aufweist, und mit zumindest einem zwischen dem Befestigungsteil und dem Nasensteg des Halteteils vorgesehenen Schwenklager, das zumindest zwei relativ zueinander um die Schwenkachse des Schwenklagers schwenkbare Lagerteile aufweist, um das Halteteil zwischen einer Gebrauchsstellung der Brillengläser und einer gegenüber der Gebrauchsstellung nach oben hochgeklappten Nichtgebrauchsstellung der Brillengläser zu verlagern.

Aus dem Stand der Technik (KR 2012 0116062 A) ist eine an einem Helm montierbare Halterung für Brillengläser bekannt. Diese Halterung besteht im Wesentlichen aus einem mit dem Helm fest verbundenen Befestigungsteil und einem Halteteil für die Brillengläser. Halteteil und Befestigungsteil halten magnetisch zusammen, um die Brillengläser bzw. das Halteteil vom Helm handhabungsfreundlich lösen zu können. Zudem bietet diese Halterung die Möglichkeit, das Halteteil gegenüber dem Befestigungsteil von einer Gebrauchsstellung in eine hochgeklappte Stellung schwenken zu können, wofür die Halterung ein Schwenklager aufweist. Da solch ein Verschwenken des Halteteils stets Kräfte/Momente auf die magnetische Verbindung zwischen Halteteil und Befestigungsteil ausübt, muss mit einem nachteiligen Lösen des Halteteils vom Befestigungsteil gerechnet werden - um dies zu verhindern, sind derartige Halterungen vergleichsweise konstruktiv aufwendig ausgebildet.

Eine Kappenanordnung mit einer Brilleneinheit, die schwenkbar mit einer Brillenmontageeinheit verbunden ist, die erste und zweite Magneteinheiten umfasst, ist zudem aus der US2007/0050888A1 bekannt.

Die Erfindung hat sich daher die Aufgabe gestellt, eine Halterung für Brillengläser der eingangs erwähnten Art konstruktiv zu vereinfachen, ohne dass dabei Standfestigkeit bzw. einfache Handhabung der Halterung beeinträchtigt werden.

Die Erfindung löst die gestellte Aufgabe dadurch, dass die ersten und zweiten Lagerteile voneinander lösbar ausgebildet sind und magnetisch zusammenhalten, wofür zumindest ein Lagerteil wenigstens einen Permanentmagneten mit einer Magnetisierungsrichtung in Richtung der Schwenkachse aufweist.

Sind die ersten und zweiten Lagerteile voneinander lösbar ausgebildet und halten magnetisch zusammen, wofür zumindest ein Lagerteil wenigstens einen Permanentmagneten mit einer Magnetisierungsrichtung in Richtung der Schwenkachse aufweist, kann dies nicht nur die Konstruktion des Halteteils vereinfachen, sondern auch die magnetische Halterung gegenüber schwenkbedingten Hebelkräften besonders entlasten, was ein unbeabsichtigtes Lösen der magnetischen Verbindung bei einem funktionsrelevanten Verschwenken des Halteteils ausschließen kann. Eine besonders standfeste Halterung kann damit geschaffen werden. Trotzdem muss durch diese erfindungsgemäß vereinfachte Konstruktion nicht mit einer Beeinträchtigung der Handhabung gerechnet werden, weil die Halterung mit einem Überwinden der magnetischen Kräfte am Schwenklager vergleichsweise handhabungsfreundlich geteilt werden kann.
Zudem kann das Schwenklager durch deren Teilung in magnetisch zusammenhaltende Lagerteile gegenüber Verschmutzung und Abrieb robuster ausgebildet werden - was die Langlebigkeit und Funktionstüchtigkeit der Halterung z. B. auch bei widrigen Umwelteinflüssen erhöhen kann.
Durch die Magnetisierungsrichtung der Permanentmagneten der Lagerteile in Richtung der Schwenkachse kann eine besonders zuverlässige Verbindung zwischen Befestigungsteil und Halteteil garantiert werden. Zudem kann eine zuverlässige und stufenlose Schwenkbarkeit des Schwenklagers garantiert werden.
Die erfindungsgemäße Halterung kann daher Standfestigkeit und einfache Handhabung mit konstruktiver Einfachheit kombinieren und sich so vom Stand der Technik deutlich abheben.

Eine besonders zuverlässige und standfeste Halterung kann zudem geschaffen werden, wenn zumindest ein erstes Lagerteil zwischen zwei zweiten Lagerteilen vorgesehen ist und relativ zu den zweiten Lagerteilen um die Schwenkachse schwenkbar ist. Durch das Umgreifen des ersten Lagerteils durch die zweiten Lagerteile kann ein Abziehen des Halteteils durch eine Quer- oder Schrägbelastung ausgeschlossen werden. Zudem kann durch das Vorsehen zweier Lagerteile am Halteteil die Haltekraft deutlich erhöht werden. Ein definiertes Abziehen bzw. Lösen des Halteteils vom Befestigungsteil kann damit in senkrechter Richtung (nach unten) ermöglich werden.

Die zuvor genannten Vorteile können weiter verbessert werden, wenn zwei erste Lagerteile zwischen zwei zweiten Lagerteilen vorgesehen sind und jeweils magnetisch zusammenhalten.

Ist das erste Lagerteil am Befestigungsteil vorgesehen und sind die zweiten Lagerteile am Halteteil vorgesehen, so kann eine konstruktiv besonders einfache Halterung geschaffen werden.

Weist jedes Lagerteil wenigstens einen Permanentmagnet auf, so kann eine besonders zuverlässige und hohe magnetische Haltekraft der Halteteile zueinander sichergestellt werden. Die Zuverlässigkeit der Halterung kann damit weiter erhöht werden.

Ist der Permanentmagnet ein axial magnetisierter Ringmagnet, in dessen Ringspalt das Halterteil oder das Befestigungsteil ragt, so kann konstruktiv einfach eine hohe Zentriergenauigkeit zwischen den Halteteilen erreicht werden. Durch die hohe Zentriergenauigkeit wird zudem ermöglicht, dass die Brillengläser parallel zu den Augen des Trägers geführt werden kann. Die erfindungsgemäße Halterung kann somit fertigungsbedingten Toleranzen standfest trotzen.

Weist das Befestigungsteil mehrere hintereinander angeordnete erste Lagerteile auf, an denen das Lagerteil am Halteteil zur Ausbildung des Schwenklagers wahlweise lagerbar ist, so kann eine besonders flexible und leicht an die Bedürfnisse des Trägers anpassbare Halterung geschaffen werden. Durch die alternativen Haltepositionen der Lagerteile ist der Abstand der Brillengläser vorteilhaft an die Bedürfnisse des Trägers anpassbar. Zudem wird durch die magnetisch lösbare Verbindung zwischen Halteteil und Befestigungsteil ein einfaches Wechseln der Haltepositionen durch Umstecken ermöglicht - und somit eine einfache Bedienbarkeit der Halterung sichergestellt.

Das Verletzungsrisiko und die Sicherheit der Vorrichtung können verbessert werden, wenn ein erstes Lagerteil am Befestigungsteil einen Anschlag für das Schwenklager ausbildet, welches sich zwischen dem anderen ersten Lagerteil am Befestigungsteil und dem Lagerteil am Halteteil ausbildet. Durch den Anschlag kann ein Verkippen der Brillengläser in Richtung des Auges des Träger standfest verhindert werden - womit etwa Verletzungen durch Schläge auf die Brillengläser oder durch Winddruck vermeidbar sind.

Die Halterung kann zudem konstruktiv einfacher gestaltet werden, wenn das Halteteil H-förmig ausgebildet ist und in den Nasensteg übergeht.

Ist das Befestigungsteil mehrteilig ausgebildet und weist dieses einen plattenförmigen Abstandshalter mit variabler Dicke auf, so kann auf konstruktiv besonders einfache Art eine Höhenverstellung der Brillengläser an der Halterung erfolgen. Insbesondere können dabei durch Wahl der geeigneten Dicke des Abstandshalters die Brillengläser vor den Augen des Trägers zentriert werden um beste Sichtverhältnisse zu ermöglichen.

Die individuelle Einstellbarkeit der Halterung kann erhöht werden, wenn das Befestigungsteil mehrteilig ausgebildet ist und eine Führung zwischen einem ersten und zweiten Teil des Befestigungsteils aufweist, wobei die Führungsbahn der Führung parallel zur Schwenkachse verläuft. Damit kann beispielsweise das Schwenklager auch nachträglich nach einer Befestigung des Befestigungsteils am Helm horizontal verstellt werden und damit die Lage des Nasenstegs eingestellt werden. Zudem erleichtert dies die Handhabbarkeit der Halterung weiter.

Die Einstellung der Schwenklage kann erleichtert werden, wenn zwischen Befestigungsteil und Nasensteg mehrere Einstellrasten vorgesehen sind.

Die erfindungsgemäße Halterung kann sich besonders für einen Helm, insbesondere einen Motorradhelm, eignen. Dies beispielsweise in Bezug auf eine belastbare feste Verbindung des Befestigungsteils an einer Kopfbedeckung.

Ist das Befestigungsteil der Halterung innerhalb der Außenschale am Innenfutter des Helms befestigt, so kann durch die geringe Baugröße der Halterung ein uneingeschränktes Gesichtsfeld durch die Brillengläser der Halterung ermöglicht werden. Zudem kann dies eine standfeste Befestigung der Halterung am Helm garantieren.

In den Figuren ist beispielsweise der Erfindungsgegenstand anhand einer Ausführungsvariante näher dargestellt. Es zeigen
- Fig. 1: eine Frontalansicht der Halterung, wobei das Halteteil am Befestigungsteil gehalten wird,
- Fig. 2: eine teilweise aufgerissene Frontalansicht der Halterung in Fig. 1 mit getrenntem Halteteil und Befestigungsteil,
- Fig. 3: eine Seitenansicht auf eine Halterung in der Gebrauchsposition,
- Fig. 4: eine Seitenansicht auf eine Halterung in der hochgeklappten Position,
- Fig. 5: eine Seitenansicht auf eine Halterung in der Gebrauchsposition, wobei die Lagerteile des Halteteils mit weiteren Lagerteilen am Befestigungsteil in Eingriff sind,
- Fig. 6: eine teilweise aufgerissene Detailansicht des Schwenklagers und
- Fig. 7: eine isometrische Ansicht auf das erfindungsgemäße Halteteil.

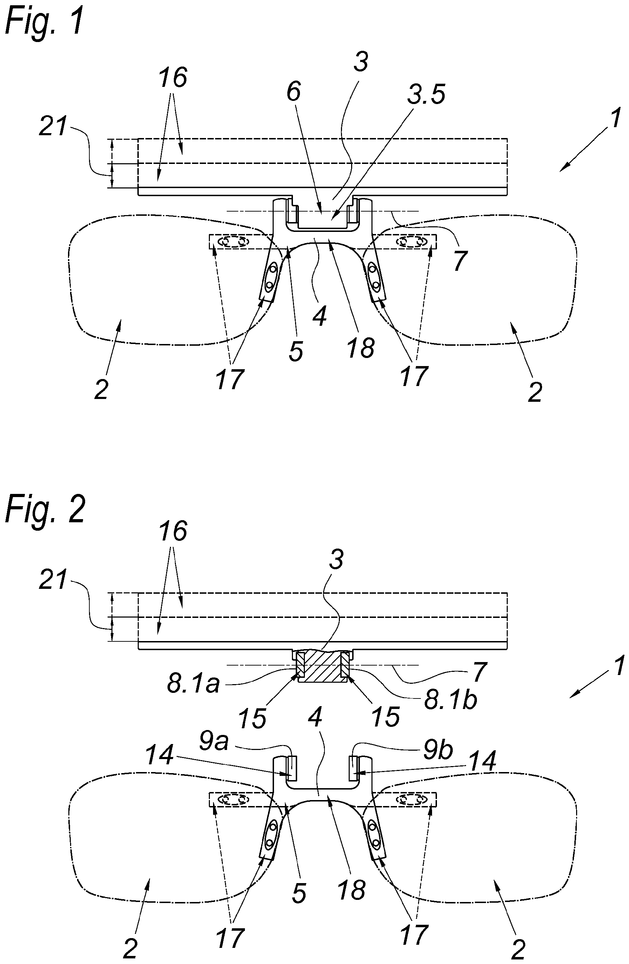

Nach den Fig. 1 und 2 ist eine Halterung 1 für Brillengläser 2 gezeigt, wobei die Halterung 1 ein Befestigungsteil 3 zur Montage der Halterung 1 an einer Kopfbedeckung, insbesondere einem Helm, aufweist - Letztgenannter ist jedoch in den Figuren nicht dargestellt. Die Halterung 1 weist zudem ein Halteteil 4 auf, welches magnetisch am Befestigungsteil 3 gehalten wird und von diesem lösbar ist.

In Fig. 1 ist beispielsweise eine Halterung 1 gezeigt, wobei das Halteteil 4 magnetisch am Befestigungsteil 3 gehalten wird. In Fig. 2 hingegen ein vom Befestigungsteil gelöstes Halteteil 4 dargestellt.

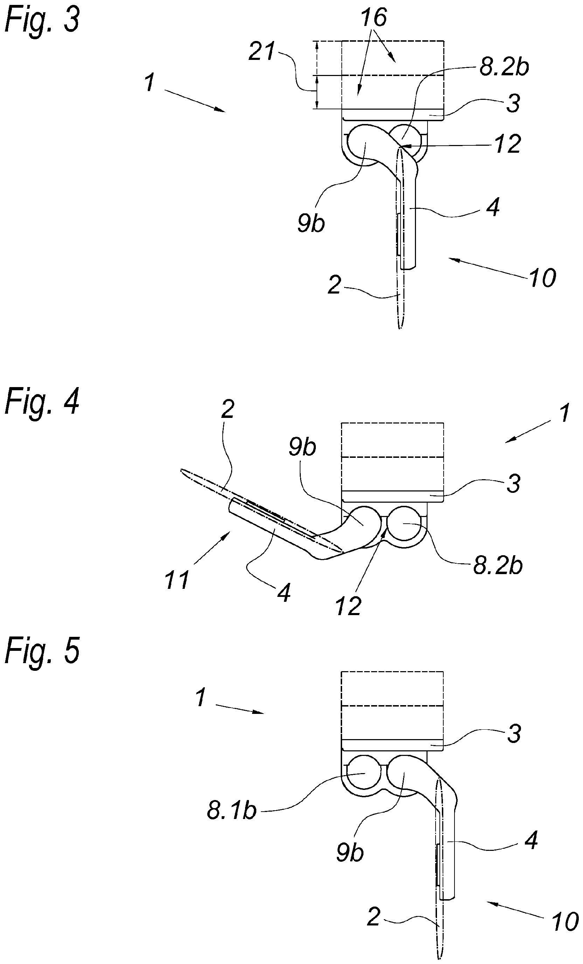

Das Halteteil 4 wiederum hat einen Nasensteg 5, an welchem die Brillengläser 2 befestigt sind. Der Nasensteg 5 ist dabei so ausgebildet, dass er die Nase des Trägers möglichst nicht berührt. Durch die Halterung 1 kann nämlich vermieden werden, dass der Nasensteg 5 an der Nase des Trägers abgestützt werden muss - womit an dieser keine Druckstellen erzeugt werden. Der Nasensteg 5 teilt sich dabei in zwei Montageabschnitte 17 und einen die Montageabschnitte 17 verbindenden Verbindungsabschnitt 18, wobei die Brillengläser an den Montageabschnitten 17 des Nasenstegs 5 befestigt sind. Das Halteteil 4 ist dazu vorzugsweise H-förmig ausgebildet und geht in den Nasensteg 5 über. Dabei sind die Montageabschnitte 17 gegenüber dem Verbindungsabschnitt 18 senkrecht nach unten gerichtet. Dies kann insbesondere den Fig. 1 und 2 entnommen werden. Alternativ können die Montageabschnitte 17 jedoch auch in waagrechter Verlängerung des Verbindungsabschnitts 18 angeordnet sein, wie dies durch die strichlierten Montageabschnitte 17 in Fig. 1 und 2 angedeutet ist. Zwischen Halteteil 4 und Befestigungsteil 3 ist ein Schwenklager 6 mit einer Schwenkachse 7 vorgesehen, um das Halteteil 4 gegenüber dem Befestigungsteil 3 um die Schwenkachse 7 schwenken zu können. Das Schwenklager 6 weist dazu mehrere Lagerteile 8.1a, 8.1b, 8.2b, 9a, 9b auf, damit das Halteteil 4 relativ zum Befestigungsteil 3 um die Schwenkachse 7 von einer Gebrauchsstellung 10 der Brillengläser 2 in eine gegenüber der Gebrauchsstellung 10 hochgeklappte Nichtgebrauchsstellung 11 der Brillengläser 2 verlagert werden kann. Die Gebrauchsstellung 10 der Brillengläser 2 ist beispielsweise aus den Fig. 3 und 5 ersichtlich. Die Nichtgebrauchsstellung 11 der Brillengläser 2 kann der Fig. 4 entnommen werden.

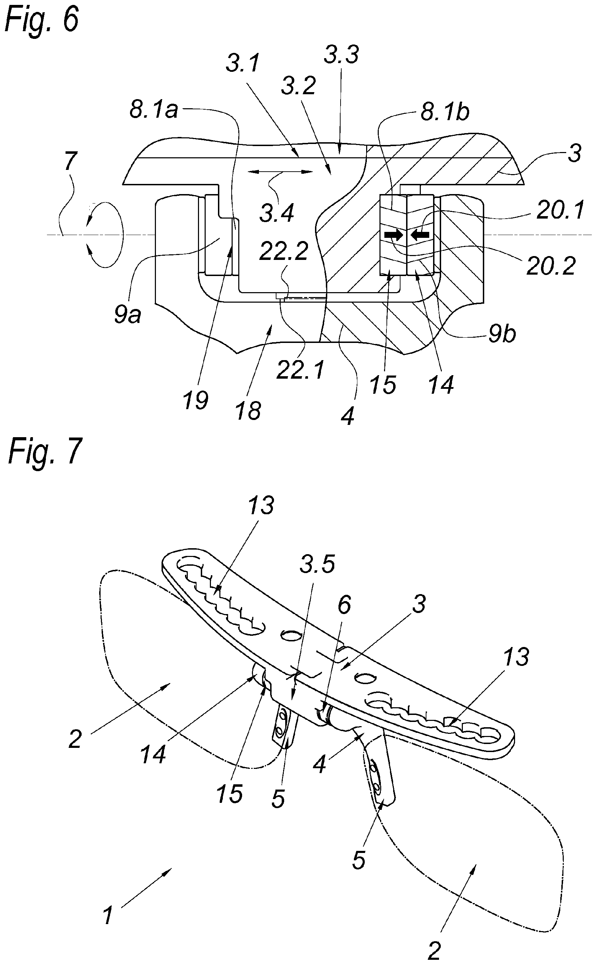

Ein erstes Lagerteil 8.1a, 8.1b nach Fig. 2 sowie nach Fig. 3 8.2b am Befestigungsteil 3 wirkt dabei mit einem zweiten Lagerteil 9a, 9b am Halteteil 4 magnetisch zusammen, um das Halteteil 4 am Befestigungsteil 3 magnetisch lösbar zu halten. Das erste Lagerteil ist zu 8.2b analog wie das erste Lagerteil 8.1a zu 8.1b an gegenüberliegenden Seiten des Befestigungsteils 3 angeordnet. Ein besonders einfach handzuhabender Mechanismus wird dadurch geschaffen. Die ersten Lagerteile 8.1a, 8.1b, 8.2b des Schwenklagers 6 sind hierzu an einem Vorsprung 3.5 des Befestigungsteils 3 vorgesehen. Dies kann die Verschwenkbarkeit zwischen Befestigungsteil 3 und Halteteil 4 erhöhen. Das Halteteil 4 umgreift diesen Vorsprung 3.5 beispielsweise.
Zudem ist das Lager 6 konstruktiv vergleichsweise einfach ausgebildet - und kann durch die magnetisch voneinander lösbaren Lagerteile 8.1a, 8.1b, 8.2b, 9a, 9b zugleich eine Halte- und Lagerfunktion erfüllen. Dazu weist zumindest ein Lagerteil 8.1a, 8.1b, 8.2b, 9a, 9b einen Permanentmagneten 14 auf, dessen Magnetisierungsrichtung 20.1, 20.2 mit der Richtung der Schwenkachse 7 zusammenfällt, was der Fig. 6 entnommen werden kann. Die derart geschaffene Halterung 1 zeichnet sich durch konstruktive Einfachheit, einfache Handhabbarkeit und hohe Zuverlässigkeit aus.

Wie aus den Fig. 1 und 2 und insbesondere im Detail aus der Fig. 6 ersichtlich, weist das Schwenklager 6 zumindest mehrere Lagerteile 8.1a, 8.1b, 8.2b, 9a, 9b auf, wovon am Halteteil 4 zwei zweite Lagerteile 9a, 9b vorgesehen sind. Mehrere erste Lagerteile 8.1a, 8.1b, 8.2b sind am Befestigungsteil 3 vorgesehen und zwar zwischen den zweiten Lagerteilen 9a, 9b, wenn das Halteteil 4 am Befestigungsteil 3 gehalten wird - wie in Fig. 1 dargestellt. Das erste Lagerteil 8.1a, 8.1b, 8.2b ist dabei relativ zu den zweiten Lagerteilen 9a, 9b um die Schwenkachse 7 schwenkbar.

Gemäß einer Ausführungsform sind am Befestigungsteil 3 jeweils zwei erste Lagerteile 8.1a, 8.1b bzw. 8.2b und am Halteteil 4 zwei zweite Lagerteile 9a, 9b vorgesehen, wobei die ersten Lagerteile 8.1a, 8.1b, 8.2b zueinander starr und zweiten Lagerteile 9a, 9b zueinander starr angeordnet sind. Wie in den Fig. 1 und 2 dargestellt, umschließen die beiden am Halteteil 4 vorgesehenen Lagerteile 9a, 9b, die ersten Lagerteile 8.1a, 8.1b, 8.2b am Befestigungsteil 3, wobei die Lagerteile 8.1a, 8.1b, 8.2b, 9a, 9b immer paarweise zusammenwirken (8.1a mit 9a, 8.1b mit 9b bzw. mit 9a, 8.2b mit 9b). Vorzugsweise weisen dazu alle Lagerteilen 8.1a, 8.1b, 8.2b, 9a, 9b Permanentmagnete 14, 15 auf, wobei die Permanentmagnete 15 der Lagerteile 8.1a, 8.1b, 8.2b gegenmagnetisch zu den jeweiligen Permanentmagneten 14 der Lagerteile 9a, 9b wirken bzw. gegengleiche Magnetisierungsrichtungen 20.1, 20.2 aufweisen. Die Permanentmagnete 14 und 15 bilden vorzugsweise zwischen einander auch die Gleitflächen 19 der Lagerteile 8.1a, 8.1b, 8.2b, 9a, 9b aus.
In einer weiteren Ausführungsform, die in den Figuren jedoch nicht näher dargestellt wurde, sind die Permanentmagnete 14, 15 als axial magnetisierte Ringmagnete ausgebildet. Dadurch kann eine einfache Zentrierung der Permanentmagnete 14, 15 in den Lagerteilen 8.1a, 8.1b, 8.2b, 9a, 9b erfolgen, indem das Halteteil 4 bzw. das Befestigungsteil 3 jeweils in den Ringspalt des Ringmagneten ragt.

Wie insbesondere aus den Fig. 3 bis 5 zu entnehmen, weist das Befestigungsteil 3 mehrere - vorzugsweise jeweils zwei - hintereinander angeordnete erste Lagerteile 8.1a, 8.1b und 8.2b auf. Das zweite Lagerteil 9a, 9b am Halteteil 4 kann dabei wahlweise mit dem ersten Lagerteil 8.1a, 8.1b oder dem anderen ersten Lagerteil 8.2b in Eingriff gebracht werden bzw. mit diesen zusammenwirken um das Schwenklager 6 auszubilden. Zwei zweite Lagerteile 9a und 9b am Halteteil 4 wirken dabei wahlweise mit den zwei ersten Lagerteile 8.1a und 8.1b oder den zwei ersten Lagerteilen 8.2b zusammen. Eine flexible Positionierung der Brillengläser 2 an der Halterung 1 wird dadurch ermöglicht.

Zudem bildet ein erstes Lagerteil 8.2b am Befestigungsteil 3 einen Anschlag 12 für das Schwenklager 6 aus. Der Anschlag 12 am ersten Lagerteil 8.2b bildet sich dabei aus, wenn eine Verbindung zwischen dem anderen ersten Lagerteil 8.1a, 8.1b am Befestigungsteil 3 und dem Lagerteil 9a, 9b am Halteteil 4 hergestellt ist. Dies kann etwa der Fig. 3 entnommen werden. Der Nasensteg 5 schlägt dabei mit seinem Verbindungsabschnitt 18 am Anschlag 12 des ersten Lagerteils 8.2b an. Der Verbindungsabschnitt 18 verläuft im Wesentlichen gerade am Nasensteg 5 und bietet dadurch einen standfesten Anschlagspunkt für das Halteteil 4. Dadurch kann verhindert werden, dass, insbesondere bei Fahrtwind, durch Druck auf die Brillengläser 2 ein Verkippen des Halteteils in Richtung des Auges des Trägers erfolgt. Der Anschlag 12 hält hierzu die Brillengläser 2 in der Gebrauchsstellung 10 in einer senkrechten Position. Ein Wegklappen in die hochgeklappte Stellung 11 ist demnach weiterhin möglich.

Um eine besonders hohe Einstellbarkeit der Halterung 1 zu gewährleisten, ist das Befestigungsteil 3 mehrteilig ausgebildet, wie dies insbesondere aus den Fig. 1-5 erkennbar ist. So weist das Befestigungsteil 3 einen in seiner Dicke 21 variablen plattenförmigen Abstandshalter 16 auf, um somit die Höhe der Brillengläser 2 im Verhältnis zum Auge des Trägers variabel verändern zu können.

Die Halterung 1 ist vorzugsweise an einer Kopfbedeckung, insbesondere an einem Helm, befestigt. Dabei wird das Befestigungsteil 3 innerhalb der Außenschale des Helms am Innenfutter befestigt. Insbesondere stößt das Befestigungsteil 3 dabei an einer unteren Stirnseite des Innenfutters an und ist über Befestigungsmittel (Nieten, Schrauben, Nägel, Bolzen etc.) an diesem befestigt. Dies wurde in den Figuren jedoch nicht dargestellt. Die Befestigungsöffnungen 13 im hierfür besonders ausgebildeten Befestigungsteil 3 zur flexiblen Anpassung und Befestigung am Helm können der Fig. 7 entnommen werden.

Wie in Fig. 6 weiter zu entnehmen, ist beim mehrteilig ausgebildeten Befestigungsteil 3 eine Führung 3.1 zwischen einem ersten und zweiten Teil 3.2, 3.3 des Befestigungsteils 3 vorgesehen. Diese Führung 3.1 weist eine lineare Führungsbahn 3.4 auf, die parallel zur Schwenkachse 7 verläuft. Damit kann das Schwenklager und damit auch der Nasensteg 4 nach montierter Halterung 1 verstellt werden, was stets hohen Tragkomfort sicherstellt.

Außerdem ist in Fig. 6 andeutungsweise zu erkennen, dass zwischen Befestigungsteil 3 und Nasensteg 5 mehrere, beispielsweise geringfügig überlappende, Einstellrasten 22.1, 22.2 vorgesehen sind. Damit kann können unterschiedliche Schwenklagen zwischen den Befestigungsteil 3 und Halteteil 4 einfacher eingestellt werden bzw. auch eine eingestellte Schwenklage fixiert werden.

## Patentansprüche

1. Halterung für Brillengläser (2) mit einem Befestigungsteil (3) zur Montage an einer Kopfbedeckung, insbesondere einem Helm, mit einem am Befestigungsteil (3) magnetisch, lösbar gehaltenen Halteteil (4), das einen Nasensteg (5) zur Halterung der Brillengläser (2) aufweist, und mit zumindest einem zwischen dem Befestigungsteil (3) und dem Nasensteg (5) des Halteteils (4) vorgesehenen Schwenklager (6), das zumindest zwei relativ zueinander um die Schwenkachse (7) des Schwenklagers (6) schwenkbare Lagerteile (8.1a, 8.1b, 8.2b, 9a, 9b) aufweist, um das Halteteil (4) zwischen einer Gebrauchsstellung (10) der Brillengläser (2) und einer gegenüber der Gebrauchsstellung (10) nach oben hochgeklappten Nichtgebrauchsstellung (11) der Brillengläser (2) zu verlagern, **dadurch gekennzeichnet, dass** die ersten (8.1a, 8.1b, und zweiten Lagerteile (9a, 9b) voneinander lösbar ausgebildet sind und magnetisch zusammenhalten, wofür zumindest ein Lagerteil (8.1a, 8.1b, 8.2b, 9a, 9b) wenigstens einen Permanentmagneten (14, 15) mit einer Magnetisierungsrichtung (20.1, 20.2) in Richtung der Schwenkachse (7) aufweist.

2. Halterung nach Anspruch 1, **dadurch gekennzeichnet, dass** das zumindest ein erstes Lagerteil (8.1a, 8.1b, 8.2b) zwischen zwei zweiten Lagerteilen (9a, 9b) vorgesehen ist und relativ zu den zweiten Lagerteilen (9a, 9b) um die Schwenkachse (7) schwenkbar ist.

3. Halterung nach Anspruch 2, **dadurch gekennzeichnet, dass** zwei erste Lagerteile (8.1a, 8.1b, 8.2b) zwischen zwei zweiten Lagerteilen (9a, 9b) vorgesehen sind und jeweils magnetisch zusammenhalten.

4. Halterung nach Anspruch 2 oder 3, **dadurch gekennzeichnet, dass** das erste Lagerteil (8.1a, 8.1b, 8.2b) am Befestigungsteil (3) vorgesehen ist und die zweiten Lagerteile (9a, 9b) am Halteteil (4) vorgesehen sind.

5. Halterung nach einem der Ansprüche 1 bis 4, **dadurch gekennzeichnet, dass** jedes Lagerteil (8.1a, 8.1b, 8.2b, 9a, 9b) wenigstens einen Permanentmagnet (14, 15) aufweist.

6. Halterung nach einem der Ansprüche 1 bis 5, **dadurch gekennzeichnet, dass** der Permanentmagnet (14 ,15) ein axial magnetisierter Ringmagnet ist, in dessen Ringspalt das Halterteil oder das Befestigungsteil ragt.

7. Halterung nach einem der Ansprüche 1 bis 6, **dadurch gekennzeichnet, dass** das Befestigungsteil (3) mehrere hintereinander angeordnete erste Lagerteile (8.1a, 8.1b, 8.2b) aufweist, an denen das Lagerteil (9a, 9b) am Halteteil (4) zur Ausbildung des Schwenklagers (6) wahlweise lagerbar ist.

8. Halterung nach Anspruch 7, **dadurch gekennzeichnet, dass** ein erstes Lagerteil (8.2b) am Befestigungsteil (3) einen Anschlag (12) für das Schwenklager (6) ausbildet, welches sich zwischen dem anderen ersten Lagerteil (8.1a, 8.1b) am Befestigungsteil (3) und dem Lagerteil (9a, 9b) am Halteteil (4) ausbildet.

9. Halterung nach einem der Ansprüche 1 bis 8, **dadurch gekennzeichnet, dass** das Halteteil (4) H-förmig ausgebildet ist und in den Nasensteg (5) übergeht.

10. Halterung nach einem der Ansprüche 1 bis 9, **dadurch gekennzeichnet, dass** das Befestigungsteil (3) mehrteilig ausgebildet ist und einen plattenförmigen Abstandshalter (16) mit variabler Dicke (21) aufweist.

11. Halterung nach einem der Ansprüche 1 bis 10, **dadurch gekennzeichnet, dass** das Befestigungsteil (3) mehrteilig ausgebildet ist und eine Führung (3.1) zwischen einem ersten und zweiten Teil (3.2, 3.3) des Befestigungsteils (3) aufweist (3), wobei die Führungsbahn (3.4) der Führung (3.1) parallel zur Schwenkachse (7) verläuft.

12. Halterung nach einem der Ansprüche 1 bis 11, **dadurch gekennzeichnet, dass** zwischen Befestigungsteil (3) und Nasensteg (5) mehrere Einstellrasten (22.1, 22.2) vorgesehen sind.

13. Helm, insbesondere Motorradhelm, mit einer Halterung (1) nach einem der Ansprüche 1 bis 12.

14. Helm nach Anspruch 13, mit einer Außenschale, mit einem im Inneren der Außenschale angeordneten Innenfutter, wobei das Befestigungsteil (3) der Halterung (1) innerhalb der Außenschale am Innenfutter befestigt ist.

## Claims

1. A holder for eyeglass lenses (2) having
a fastening part (3) for attaching to a head covering, having
a holding part (4), which is magnetically secured to the fastening part (3) in detachable fashion and has a nose bridge (5) for holding eyeglass lenses (2), and having
at least one swivel bearing (6), which is provided between the fastening part (3) and the nose bridge (5) of the holding part (4) and has at least two bearing parts (8.1a, 8.1b, 8.2b, 9a, 9b) that are able to swivel relative to each other around the swivel axis (7) of the swivel bearing (6) in order to move the holding part (4) between a use position (10) of the eyeglass lenses (2) and a non-use position (11) of the eyeglass lenses (2) in which they are folded upward in relation to the use position (10), **characterized in that** the first bearing parts (8.1a, 8.1b and second bearing parts (9a, 9b) are detachable from each other and are held together magnetically, for which purpose, at least one bearing part (8.1a, 8.1b, 8.2b, 9a, 9b) has at least one permanent magnet (14, 15) with a magnetization direction (20.1, 20.2) oriented in the direction of the swivel axis (7).

2. Holder according to claim 1, **characterized in that** the at least one first bearing part (8.1a, 8.1b, 8.2b) is provided between two second bearing parts (9a, 9b) and is able to swivel around the swivel axis (7) relative to the second bearing parts (9a, 9b).

3. Holder according to claim 2, **characterized in that** two first bearing parts (8.1a, 8.1b, 8.2b) are provided between two second bearing parts (9a, 9b) and stick to each other magnetically.

4. Holder according to claim 2 or 3, **characterized in that** the at least one first bearing part (8.1a, 8.1b, 8.2b) is provided on the fastening part (3) and the second bearing parts (9a, 9b) are provided on the holding part (4).

5. Holder according to one of the claims 1 to 4, **characterized in that** each bearing part (8.1a, 8.1b, 8.2b, 9a, 9b) has at least one permanent magnet (14, 15).

6. Holder according to one of the claims 1 to 5, **characterized in that** the permanent magnet (14, 15) is an axially magnetized ring magnet and the holding part or the fastening part protrudes into its annular gap.

7. Holder according to one of the claims 1 to 6, **characterized in that** the fastening part (3) has a plurality of first bearing parts (8.1a, 8.1b, 8.2b) positioned one behind another, at which the bearing part (9a, 9b) can be fastened on the holding part (4) to any one of the first bearing parts (8.1a, 8.1b, 8.2b) in order to form the swivel bearing (6).

8. Holder according to claim 7, **characterized in that** a first bearing part (8.2b) on the fastening part (3) functions as a stop (12) for the swivel bearing (6) that is formed between the other first bearing part (8.1a, 8.1b) on the fastening part (3) and the bearing part (9a, 9b) on the holding part (4).

9. Holder according to one of the claims 1 to 8, **characterized in that** the holding part (4) is embodied as H-shaped and transitions into the nose bridge (5).

10. Holder according to one of the claims 1 to 9, **characterized in that** the fastening part (3) is composed of a plurality of parts and has a plate-shaped spacer (16) with a variable thickness (21).

11. Holder according to one of the claims 1 to 10, **characterized in that** the fastening part (3) is composed of a plurality of parts and has a guide (3.1) between a first and second part (3.2, 3.3) of the fastening part (3) (3), with the guidance path (3.4) of the guide (3.1) extending parallel to the swivel axis (7).

12. Holder according to one of the claims 1 to 11, **characterized in that** a plurality of adjusting catches (22.1, 22.2) is provided between the fastening part (3) and the nose bridge (5).

13. Helmet with a holder according to one of the claims 1 to 12.

14. The helmet according to claim 13, with an outer shell and an inner lining positioned inside the outer shell, wherein the fastening part (3) of the holder (1) is fastened to the inner lining inside the outer shell.

## Revendications

1. Monture pour verres de lunettes (2) avec une partie de fixation (3) pour le montage sur un couvre-chef, en particulier un casque, avec une partie de maintien (4) retenue de façon amovible par aimantation sur la partie de fixation (3) et comportant un pont (5) pour le maintien des verres de lunettes (2) et avec au moins un support pivotant (6) prévu entre la partie de fixation (3) et le pont (5) de la partie de maintien (4) qui comporte au moins deux parties de support (8.1a, 8.1b, 8.2b, 9a, 9b) capables de pivoter l'une par rapport à l'autre autour de l'axe de pivotement (7) du support pivotant (6) pour déplacer la partie de maintien (4) entre une position d'utilisation (10) des verres de lunettes (2) et une position de non-utilisation (11) des verres de lunettes (2) relevée vers le haut par rapport à la position d'utilisation (10), **caractérisée en ce que** les premières parties de support (8.1a, 8.1b et les deuxièmes (9a, 9b) sont conçues pour pouvoir être séparées les unes des autres et tiennent ensemble par aimantation, ce pour quoi au moins une partie de support (8.1a, 8.1b, 8.2b, 9a, 9b) comporte au moins un aimant permanent (14, 15) dont la direction d'aimantation (20.1, 20.2) suit celle de l'axe de pivotement (7).

2. Monture selon la revendication 1, **caractérisée en ce que** l'au moins une première partie de support (8.1a, 8.1b, 8.2b) est prévue entre deux deuxièmes parties de support (9a, 9b) et peut pivoter par rapport au deuxièmes parties de support (9a, 9b) autour de l'axe de pivotement (7).

3. Monture selon la revendication 2, **caractérisée en ce que** deux premières parties de support (8.1a, 8.1b, 8.2b) sont prévues entre deux deuxièmes parties de support (9a, 9b) et tiennent ensemble par aimantation.

4. Monture selon la revendication 2 ou 3, **caractérisée en ce que** la première partie de support (8.1a, 8.1b, 8.2b) est prévue sur la partie de fixation (3) et les deuxièmes parties de support (9a, 9b) sont prévues sur la partie de maintien (4).

5. Monture selon l'une des revendications 1 à 4, **caractérisée en ce que** chaque partie de support (8.1a, 8.1b, 8.2b, 9a, 9b) comporte au moins un aimant permanent (14, 15).

6. Monture selon l'une des revendications 1 à 5, **caractérisée en ce que** l'aimant permanent (14, 15) est un aimant annulaire à aimantation axiale et dans la fente annulaire duquel la partie de maintien ou la partie de fixation fait saillie.

7. Monture selon l'une des revendications 1 à 6, **caractérisée en ce que** la partie de fixation (3) comporte plusieurs premières parties de support (8.1a, 8.1b, 8.2b) disposées les unes à la suite des autres, sur lesquelles la partie de support (9a, 9b) peut être supportée au choix sur la partie de maintien (4) pour former le support pivotant (6).

8. Monture selon la revendication 7, **caractérisée en ce qu'**une première partie de support (8.2b) forme sur la partie de fixation (3) une butée (12) pour le support pivotant (6) qui se forme entre l'autre première partie de support (8.1a, 8.1b) sur la partie de fixation (3) et la partie de support (9a, 9b) sur la partie de maintien (4).

9. Monture selon l'une des revendications 1 à 8, **caractérisée en ce que** la partie de maintien (4) est en forme de H et forme une transition avec le pont (5).

10. Monture selon l'une des revendications 1 à 9, **caractérisée en ce que** la partie de fixation (3) est conçue en plusieurs parties et présente une pièce d'écartement (16) en forme de plaque ayant une épaisseur (21) variable.

11. Monture selon l'une des revendications 1 à 10, **caractérisée en ce que** la partie de fixation (3) est conçue en plusieurs parties et présente un guidage (3.1) entre une première partie et une deuxième (3.2, 3.3) de la partie de fixation (3), la trajectoire de guidage (3.4) du guidage (3.1) passant parallèlement à l'axe de pivotement (7).

12. Monture selon l'une des revendications 1 à 11, **caractérisée en ce que** plusieurs crans de réglage (22.1, 22.2) sont prévus entre la partie de fixation (3) et le pont (5).

13. Casque, en particulier casque de moto, avec une monture (1) selon l'une des revendications 1 à 12.

14. Casque selon la revendication 13 avec une coque extérieure, avec un rembourrage intérieur disposé à l'intérieur de la coque extérieure, dans lequel la partie de fixation (3) de la monture (1) est fixée sur le rembourrage intérieur à l'intérieur de la coque extérieure.
